# EUROPEAN PATENT SPECIFICATION

(11) **EP 3 817 276 B1**
(45) Date of publication and mention of the grant of the patent: **21.05.2025**
(21) Application number: 20204926.8
(22) Date of filing: 30.10.2020
(51) Int. Cl.: H04L 9/08, H04L 9/14, H04L 9/40

(54) **APPARATUS AND METHOD FOR DATA SECURITY**
VORRICHTUNG UND VERFAHREN FÜR DATENSICHERHEIT
APPAREIL ET PROCÉDÉ DE SÉCURITÉ DE DONNÉES

(30) Priority: 31.10.2019 KR 20190137086
(43) Date of publication of application: 05.05.2021
(73) Proprietor: Samsung SDS Co., Ltd., Seoul 05510 (KR)
(72) Inventor: LEE, Chang Hoon, 05510 Seoul (KR); AHN, Jang Hyuk, 05510 Seoul (KR); SEON, Dong Ghu, 05510 Seoul (KR); KIM, Ki Young, 05510 Seoul (KR); LEE, Young Hwa, 05510 Seoul (KR); YOON, Ji Sang, 05510 Seoul (KR)
(74) Representative: Grünecker Patent- und Rechtsanwälte PartG mbB

(56) References cited:
- WO-A1-2015/065472
- US-A1- 2019 297 063

## Description

### BACKGROUND

### 1. Field

The disclosed embodiments relate to technology for data security.

### 2. Description of Related Art

The necessity of a single security system is emerging to securely protect data under multiple system operating environments including a cloud environment and an on-premise environment.

In order to provide a single security system, a method of directly expanding a network, a method of directly registering a cryptographic key for data encryption in a key management system provided in a cloud environment, a method of constructing a distributor's cryptographic key management system for each cloud, etc. have been proposed, but these methods are used only in a limited way due to cost and performance problems.
US 2019/0297063 A1 refers to IAAS-aided access control for information centric networking with internet-of-things. A producer communicates over a network with a user application in an infrastructure-as-a-service, laaS, and an laaS node. The producer encrypts content with first encryption using a first key and second encryption using a second key, to produce twice encrypted content. The producer encrypts the second key with attribute-based encryption and symmetric encryption using an laaS key, to produce a twice encrypted second key. The producer provides to the user application the twice encrypted content, the twice encrypted second key, and key information configured to remove the first encryption from the twice encrypted content. The producer provides to the laaS node the laaS key to enable the laaS node to remove the symmetric encryption from the twice encrypted second key, such that the user application and the laaS node are constrained to exchange with each other key-related information and intermediate decryption results in order to recover the content.

### SUMMARY

It is the object of the present invention to provide improved data encryption/decryption apparatus and improved data encryption/decryption methods.
This object is solved by the subject matter of the independent claims.
Preferred embodiments are defined by the dependent claims.

Embodiments disclosed herein are for securely protecting data.

In addition, embodiments disclosed herein are to provide a data encryption apparatus that considers an environment to which data is intended to be distributed and an application that accesses data.

In addition, embodiments disclosed herein are to provide a data decryption apparatus that considers an environment to which data is intended to be distributed and an application that accesses data.

A data encryption apparatus according to an embodiment including a receptor to receive distribution target data including one or more distribution target cryptographic keys and a distribution target application from a distributor environment, an encryptor to superencipher the distribution target data using a distribution target environment cryptographic key acquired from a distribution target environment and access information on the distribution target data, and a transmitter to transmit the superenciphered distribution target data and the distribution target application to the distribution target environment.

The distribution target data may further include at least one of one or more call information constituting the distribution target application and one or more environment variables of the distribution target application.

The access information may include ID information and password information referenced when the distribution target application is driven.

The distribution target application is an application to which a code sign has been applied, and the distribution target data may further include a public key to verify the code sign.

The distribution target data may further include a ciphertext obtained by encrypting the distribution target environment cryptographic key in the distribution target environment.

The encryptor may primarily encrypts the distribution target data using the access information, and secondarily encrypts the primarily encrypted distribution target data using the distribution target environment cryptographic key.

A data decryption apparatus according to an embodiment including a receptor to receive distribution target data including one or more cryptographic keys intended to be distributed to a distribution target environment and superenciphered using a distribution target environment cryptographic key acquired from the distribution target environment and access information on the distribution target data, a decryptor to primarily decrypt the superenciphered distribution target data using a decryption key acquired from the distribution target environment and to secondarily decrypt the primarily decrypted distribution target data using the access information on the distribution target data when the primary decryption is successful, and a verifier to verify a code sign of a distribution target application using a code signing public key included in the distribution target data when the decryptor succeeds in the secondary decryption.

A data encryption method according to an embodiment including receiving distribution target data including one or more distribution target cryptographic keys and a distribution target application from a distributor environment, distributing access information on the distribution target data and the distribution target application to a distribution target environment, superenciphering the distribution target data using a distribution target environment cryptographic key acquired from a distribution target environment and access information on the distribution target data, and transmitting the superenciphered distribution target data to the distribution target environment.

The distribution target data may further include at least one of one or more call information constituting the distribution target application and one or more environment variables of the distribution target application.

The access information may include ID information and password information referenced when the distribution target application is driven.

The distribution target application is an application to which a code sign has been applied, and the distribution target data may further include a public key for verifying the code sign.

The distribution target data may further include a ciphertext obtained by encrypting the distribution target environment cryptographic key in the distribution target environment.

In the superenciphering, the distribution target data may be primarily encrypted using the access information and the primarily encrypted distribution target data may be secondarily encrypted using the distribution target environment cryptographic key.

A data decryption method according to an embodiment including receiving distribution target data including one or more cryptographic keys intended to be distributed to a distribution target environment and superenciphered using a distribution target environment cryptographic key acquired from the distribution target environment and access information on the distribution target data, primarily decrypting the superenciphered distribution target data using a decryption key acquired from the distribution target environment, secondarily decrypting the primarily decrypted distribution target data using the access information on the distribution target data when the primary decryption is successful, and verifying a code sign of a distribution target application using a code signing public key included in the distribution target data when the secondary decryption is successful.

According to the disclosed embodiments, it is possible to allow access to the cryptographic key of the distribution target data only under an intended environment and an intended application by decrypting the superenciphered data to be distributed in the primary and secondary stages.

In addition, according to the disclosed embodiments, a cryptographic key for data encryption may be managed by the distributor's application, not the distribution target environment, thereby capable of allowing the distributor to take an initiative in data security.

In addition, according to the disclosed embodiments, network configuration costs can be reduced by not requiring a network connection to provide cryptographic keys between distribution target environments.

### BRIEF DESCRIPTION OF THE DRAWINGS

FIG. 1 is a diagram for describing a data encryption system according to an embodiment.
FIG. 2 is a block diagram illustrating a data encryption apparatus according to an embodiment.
FIG. 3 is a block diagram illustrating a data decryption apparatus according to an embodiment.
FIG. 4 is a diagram for describing distribution target data according to an embodiment.
FIG. 5 is a flowchart illustrating a data encryption method according to an embodiment.
FIG. 6 is a flowchart illustrating a data decryption method according to an embodiment.
FIG. 7 is a flowchart illustrating a data decryption method according to another embodiment.
FIG. 8 is a block diagram illustratively describing a computing environment including a computing device suitable for use in exemplary embodiments.

### DETAILED DESCRIPTION

Hereinafter, specific embodiments of the present invention will be described with reference to the accompanying drawings. The following detailed description is provided to aid in a comprehensive understanding of a method, a device and/or a system described in the present specification. However, the detailed description is only for illustrative purpose and the present invention is not limited thereto.

In describing the embodiments of the present invention, when it is determined that a detailed description of known technology related to the present invention may unnecessarily obscure the gist of the present invention, the detailed description thereof will be omitted. In addition, terms to be described later are terms defined in consideration of functions in the present invention, which may vary depending on intention or custom of a user or operator. Therefore, the definition of these terms should be made based on the contents throughout this specification. The terms used in the detailed description are only for describing the embodiments of the present invention and should not be used in a limiting sense. Unless explicitly used otherwise, an expression in a singular form includes a meaning of a plural form. In this description, expressions such as "including" or "comprising" are intended to indicate certain properties, numbers, steps, elements, and some or combinations thereof, and such expressions should not be interpreted to exclude the presence or possibility of one or more other properties, numbers, steps, elements other than those described, and some or combinations thereof.

In some embodiments, a communication network may include the Internet, one or more local area networks, wide area networks, cellular networks, mobile networks, other types of networks, or a combination of these networks.

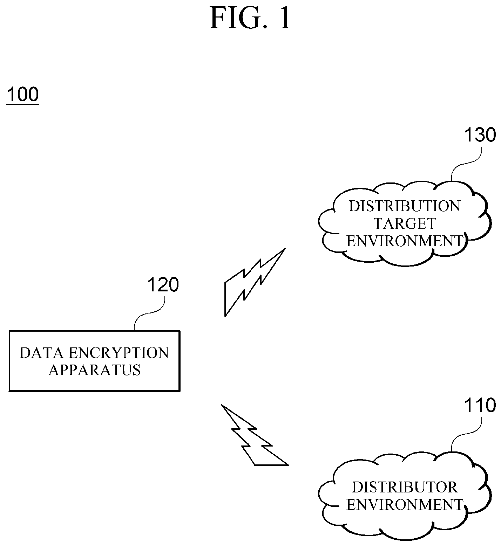

FIG. 1 is a diagram illustrating a data encryption system 100 according to an embodiment.

Referring to FIG. 1, the data encryption system 100 according to an embodiment includes a distributor environment 110, a data encryption apparatus 120, and a distribution target environment 130.

According to an embodiment, the distributor environment 110 means a system that distributes an application or cryptographic key to the distribution target environment 130, and may also be referred to as an on-premise environment, on-prem environment, etc.

According to an embodiment, the data encryption apparatus 120 may mean an apparatus that performs a function of encrypting data received from a distributor environment so that the data can be decrypted only under a specific distribution target environment 130 and transmitting the data to the distribution target environment 130.

According to an embodiment, the distribution target environment (DTE) 130 may mean a system which is located outside the distributor environment 110 and to which information including an application or a cryptographic key is distributed.

For example, a 'cloud environment', which is a representative distribution target environment 130, is an environment that provides virtualized system resources through the Internet, and through this, a distributor can process a specific operation or task with a processing device in the cloud environment rather than a processing device owned by the distributor.

In addition, the distribution target application means an apparatus that is distributed to various distribution target environments 130 by the distributor to perform an information exchange function between a key management system in the distribution target environment 130, a data decryption apparatus 300 and a database in the distribution target environment 130, and accesses distribution target data under the control of the data decryption device 300 when receiving a driving command from the distributor.

In addition, the 'key management system (KMS) in the distribution target environment 130' means an apparatus that generates a cryptographic key from the distribution target environment 130, encrypts the cryptographic key, and transmits the cryptographic key generated from the distribution target environment 130 and a value obtained by encrypting the cryptographic key to the distributor environment 110.

In addition, the 'database in the distribution target environment 130' is an apparatus that stores a plurality of pieces of information transmitted to the distribution target environment 130, and the 'database in the distributor environment 110' means an apparatus that stores a plurality of pieces of information transmitted to the distributor environment 110.

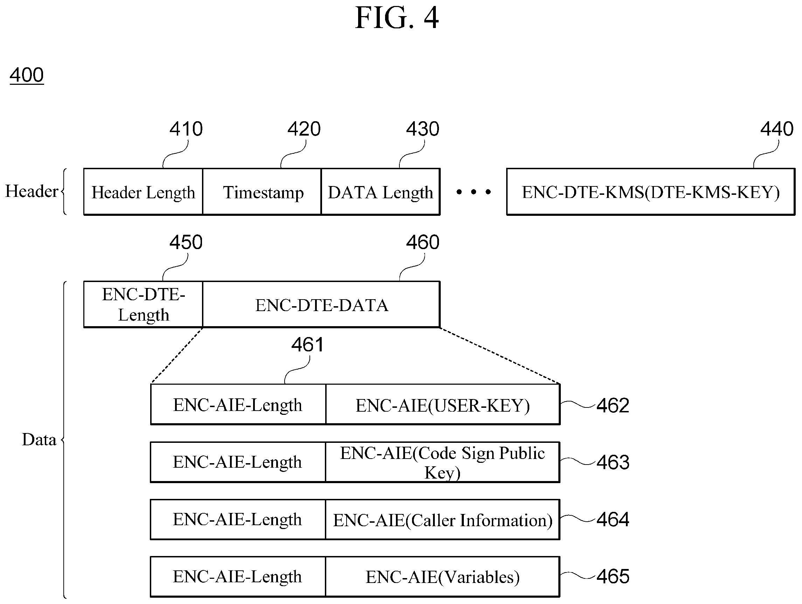

In addition, 'distribution target data' means a set of a series of information generated in the distributor environment 110, encrypted in the data encryption apparatus, and transmitted to the data decryption apparatus 300. For example, the 'distribution target data' may include one or more distribution target cryptographic keys. Hereinafter, it will be described in detail with reference to FIG. 4.

In addition, 'access information on distribution target data' means a set of information used to encrypt and decrypt the distribution target data.

In addition, 'access information based encryption (AIE)' means an encryption technique that encrypts distribution target data based on specific access information corresponding to a specific distribution target application so that only specific distribution target applications can access the distribution target data.

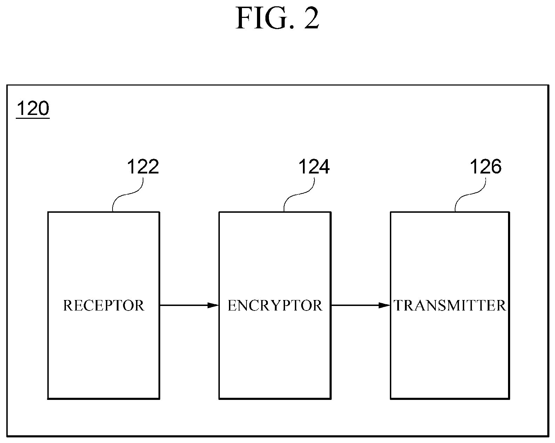

FIG. 2 is a block diagram illustrating a data encryption apparatus 120 according to an embodiment. Referring to FIG. 2, the data encryption apparatus 120 according to an embodiment includes a receptor 122, an encryptor 124, and a transmitter 126.

The receptor 122 receives distribution target data including one or more distribution target cryptographic keys and a distribution target application from the distributor environment 110.

According to an embodiment, the distribution target data may further include at least one of one or more call information constituting the distribution target application and one or more environment variables of the distribution target application.

Specifically, one or more call information may include class information constituting a distribution target application and method information constituting a class.

In addition, specifically, one or more environment variables of the distribution target application are information that the data decryption device 300 checks when the distribution target application accesses the distribution target data for driving, and these environment variables may include at least one of one or more white list information and one or more black list information.

In more detail, the white list information is one or more conditions that should be satisfied in order to drive a distribution target application that accesses the distribution target data, and may include a location on a path in which the distribution target application is executed, an operating system version of the distribution target application, a host name of a distribution target application system, etc.

In addition, the black list information is one or more conditions that should not to be satisfied in order to drive the distribution target application that accesses the distribution target data, and may include a value of specific parameter, specific setting, etc. that should not be satisfied when the distribution target application is normally driven.

According to an embodiment, the distribution target application may be an application to which a code has been applied, and the distribution target data may further include a code signing public key for verifying this code sign.

In this case, the 'code sign' may perform a function of ensuring that portions of the code included in a signing object are unchanged and reliable.

The encryptor 124 superenciphers the distribution target data using a distribution target environment cryptographic key acquired from the distribution target environment 130 and access information on the distribution target data.

According to an embodiment, the distribution target environment cryptographic key acquired from the distribution target environment 130 may be generated by the key management system in the distribution target environment 130.

According to an embodiment, the access information on the distribution target data may include ID information and password information referenced when the distribution target application is driven.

According to an embodiment, the distribution target data may further include a ciphertext obtained by encrypting the distribution target environment cryptographic key in the distribution target environment 130.

According to an embodiment, the encryptor 124 may primarily encrypt the distribution target data using access information on the distribution target data and secondarily encrypt the primarily encrypted distribution target data using the distribution target environment cryptographic key.

Specifically, the encryptor 124 may primarily encrypt the distribution target data by including a value, which is obtained by encrypting a code signing public key for verifying a code-signed distribution target application using access information on the distribution target data, in the distribution target data.

In addition, the encryptor 124 may secondarily encrypt the distribution target data by including a value, which is obtained by encrypting the distribution target environment cryptographic key acquired from the distribution target environment 130 using a key management system in the distribution target environment 130, in the distribution target environment 130.

The transmitter 126 transmits superenciphered distribution target data and the distribution target application to the distribution target environment 130.

According to an embodiment, when the receptor 122 receives a distribution request from the distributor environment 110, the transmitter 126 may transmit the superenciphered distribution target data to the distribution target environment 130.

In this case, the 'distribution request' may be a command or signal requesting the data encryption apparatus 120 to transmit the superenciphered distribution target data to the data decryption apparatus 300 in the distribution target environment 130.

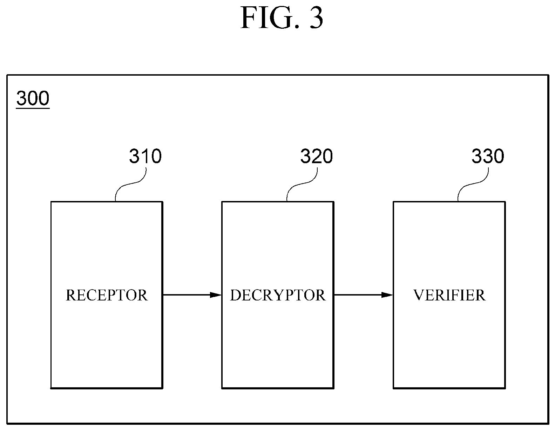

FIG. 3 is a block diagram illustrating the data decryption apparatus 300 according to an embodiment.

Referring to FIG. 3, the data decryption apparatus 300 according to an embodiment includes a receptor 310, a decryptor 320, and a verifier 330.

The data decryption apparatus 300 means an apparatus that is distributed to various distribution target environments 130 by a distributor and receives encrypted distribution target data from the data encryption apparatus 120, one or more pieces of information and one or more cryptographic keys for data decryption and, using this, controls the encrypted distribution target data distributed to the distribution target environment 130 to be decrypted only under preset conditions. For example, the data decryption apparatus 300 may be a device that executes one or more commands for the control described above.

In addition, when the data decryption device 300 performs the control described above without the intervention of a distributor, the data decryption device 300 may be referred to as an agent.

According to an embodiment, if a network for receiving the distribution target data is connected to the data decryption apparatus 300, the data decryption apparatus 300 may perform functions described in the following embodiments even if there is no other physical or electrical connection between the distributor environment 110 or the data encryption apparatus 120.

According to an embodiment, before receiving the distribution target data from the data encryption apparatus 120, the data decryption apparatus 300 may be distributed together when a distribution target application is distributed to the distribution target environment 130.

The receptor 310 receives distribution target data including one or more cryptographic keys intended to be distributed to the distribution target environment 130 and superenciphered using a distribution target environment cryptographic key acquired from the distribution target environment and access information on distribution target data.

The decryptor 320 primarily decrypts the superenciphered distribution target data using a decryption key acquired from the distribution target environment 130, and secondarily decrypts the primarily decrypted distribution target data using access information on the distribution target data when the primary decryption is successful,

Specifically, first, in the primary decryption, the decryptor 320 decrypts a value, which is obtained by encrypting the distribution target environment cryptographic key obtained from the distribution target environment 130 using a key management system in the distribution target environment 130, using the key management system in the distribution target environment 130.

Thereafter, the decryptor 320 decrypts the distribution target data using the decryption key acquired from the distribution target environment 130 corresponding to the distribution target environment cryptographic key acquired from the distribution target environment 130.

In addition, in the secondary decryption, the decryptor 320 checks whether preset access information required to access the distribution target data decrypted through the primary decryption and precreated access information in a setting item of the distribution target application are identical information, and decrypts the distribution target data only when the two access information are identical.

When the decryptor 320 succeeds in the secondary decryption, the verifier 330 verifies the code sign of the distribution target application using the code signing public key included in the distribution target data.

Specifically, the verifier 330 verifies that the corresponding distribution target application is distributed from the distributor environment 110 by checking the code sign of the distribution target application using the code signing public key in the distribution target data. If the code sign of the distribution target application is not checked using the code signing public key in the distribution target data, the verifier 330 may determine that the distribution target application is distributed from an untrusted environment and may not allow the distribution target application to be driven.

According to an embodiment, when it is determined that the code sign of the distribution target application is reliable, the verifier 330 may determine whether to drive the distribution target application by comparing data in the distribution target application with the distribution target data.

For example, the verifier 330 compares the call information and environment variables among the data in the distribution target application with the call information and environment variables among the distribution target data, and allow the distribution target application to be driven when a preset ratio or more among all the call information and environment variables which are comparison targets is the same.

According to an embodiment, when the verification of the code sign of the distribution target application is successful, the verifier 330 can perform code sign verification according to a preset cycle when the distribution target application for which code sign verification is successful.

Specifically, when the verifier 330 receives a driving request for the corresponding distribution target application again from the distributor environment 110 after the distribution target application for which code sign verification is successful is driven, if the corresponding driving request is received before a preset period has elapsed from the latest driving time point of the distribution target application, the verifier 330 may allow the distribution target application to be driven without verifying the code sign for the distribution target application.

FIG. 4 is a diagram for describing distribution target data according to an embodiment.

Referring to FIG. 4, the distribution target data according to an embodiment is composed of a header field and a data field.

The header field may include a header length 410, a timestamp 420, a data length 430, and an encrypted distribution target environment cryptographic key 440.

Specifically, the header length 410 means information on a length of the header field in the distribution target data.

In addition, the timestamp 420 means information on the time taken to generate the distribution target data.

In addition, the data length 430 means information on the total length of the data field of the decrypted distribution target data.

In addition, the encrypted distribution target environment cryptographic key 440 may include a result value obtained by encrypting the cryptographic key generated by the key management system in the distribution target environment 130 using the key management system in the distribution target environment 130, and the encrypted result value can be decrypted only when the key management system in the distribution target environment 130 is used.

According to an embodiment, the key management system in the distribution target environment 130 may use a hardware token method, a password-based encryption (PBE) method, etc.

The data field may include a distribution target environment encryption length 450 and a distribution target environment encryption data 460, and the distribution target environment encryption data 460 may include an access information based encryption (AIE) length 461 and AIE encrypted data.

Specifically, the distribution target environment encryption length 450 means information on the length of the distribution target data encrypted using a cryptographic key generated by the key management system in the distribution target environment 130.

In addition, the distribution target environment encryption data 460 means information on distribution target data encrypted by the key management system in the distributor environment 110 using the cryptographic key generated by the key management system in the distribution target environment 130.

In addition, the AIE encryption length 461 means information on the length of the distribution target data encrypted using the access information on the distribution target data.

In addition, the AIE encrypted data means information on the distribution target data encrypted by the key management system in the distributor environment 110 using access information on the distribution target data.

For example, AIE encrypted data may include at least one of an AIE encryption cryptographic key 462, an AIE encryption code signing public key 463, AIE encryption call information 464, and an AIE encryption environment variable 465.

In this case, the AIE encryption cryptographic key 462 means information on the cryptographic key encrypted by the key management system in the distributor environment 110 using access information on the distribution target data.

In addition, the AIE encryption code signing public key 463 means information on a public key for code sign verification for the distribution target application, which is encrypted by the key management system in the distributor environment (110) using the access information on the distribution target data.

In addition, the AIE encryption call information 464 means information on a class and a method in the distribution target application, which is encrypted by the key management system in the distributor environment 110 using the access information on distribution target data.

In addition, the AIE encryption environment variable 465 means information referenced when driving the distribution target application, which is encrypted by the key management system in the distributor environment 110 using access information on the distribution target data.

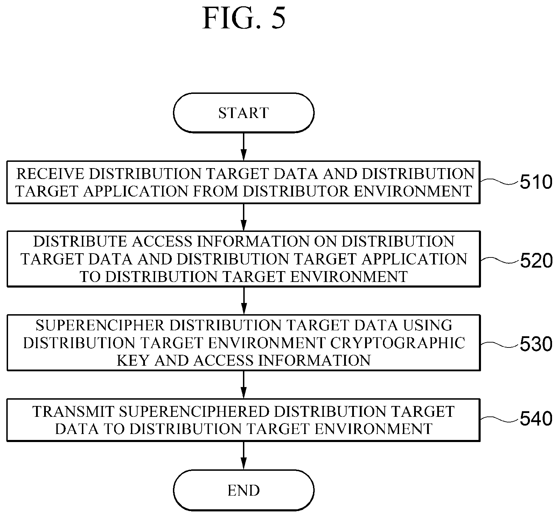

FIG. 5 is a flowchart illustrating a data encryption method according to an embodiment.

The method illustrated in FIG. 5 may be performed, for example, by the data encryption apparatus 120 described above.

Referring to FIG. 5, first, the data encryption apparatus 120 receives distribution target data including one or more distribution target cryptographic keys and a distribution target application from the distributor environment 110 (510).

Thereafter, the data encryption apparatus 120 distributes access information on the distribution target data and the distribution target application to the distribution target environment 130 (520).

Thereafter, the distribution target data is superenciphered using the distribution target environment cryptographic key acquired from the distribution target environment 130 and access information on the distribution target data (530).

Thereafter, the data encryption apparatus 120 transmits the superenciphered distribution target data to the distribution target environment 130 (540).

In the flowchart illustrated in FIG. 5, the method is described by dividing the method into a plurality of steps, but at least some of the steps may be performed in a different order, performed together by being combined with other steps, omitted, performed by being divided into detailed steps, or performed by being added with one or more steps (not illustrated).

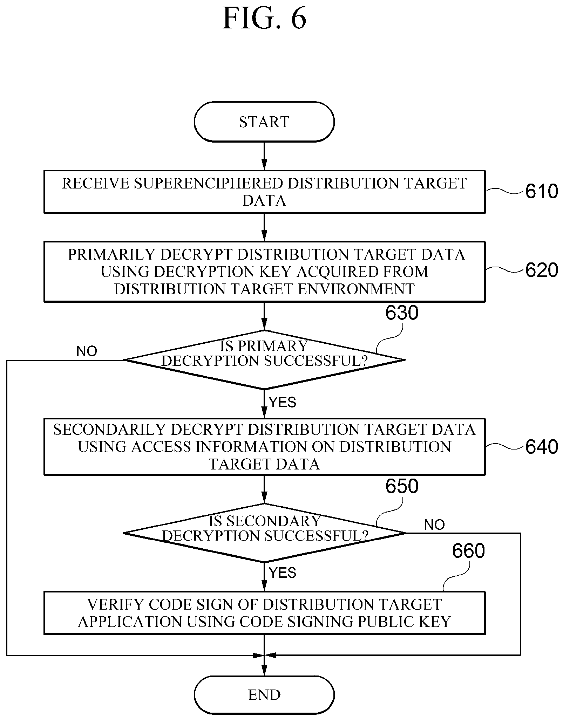

FIG. 6 is a flowchart illustrating a data decryption method according to an embodiment.

The method illustrated in FIG. 6 may be performed, for example, by the data decryption apparatus 300 described above.

Referring to FIG. 6, first, the data decryption apparatus 300 includes one or more distribution target cryptographic keys intended to be distributed to the distribution target environment 130, and receives the superenciphered distribution target data using the distribution target environment cryptographic key acquired from the distribution target environment 130 and access information on the distribution target data (610).

Thereafter, the data decryption apparatus 300 primarily decrypts the superenciphered distribution target data using the decryption key acquired from the distribution target environment 130 (620).

Thereafter, when the primary decryption of the superenciphered distribution target data is successful, the data decryption apparatus 300 secondarily decrypts the primarily decrypted distribution target data using access information on the distribution target data (630, 640).

Thereafter, when the secondary decryption of the primarily decrypted distribution target data is successful, the data decryption apparatus 300 verifies the code sign of the distribution target application using the code signing public key included in the distribution target data (650, 660).

In the flowchart illustrated in FIG. 6, the method is described by dividing the method into a plurality of steps, but at least some of the steps may be performed in a different order, performed together by being combined with other steps, omitted, performed by being divided into detailed steps, or performed by being added with one or more steps (not illustrated).

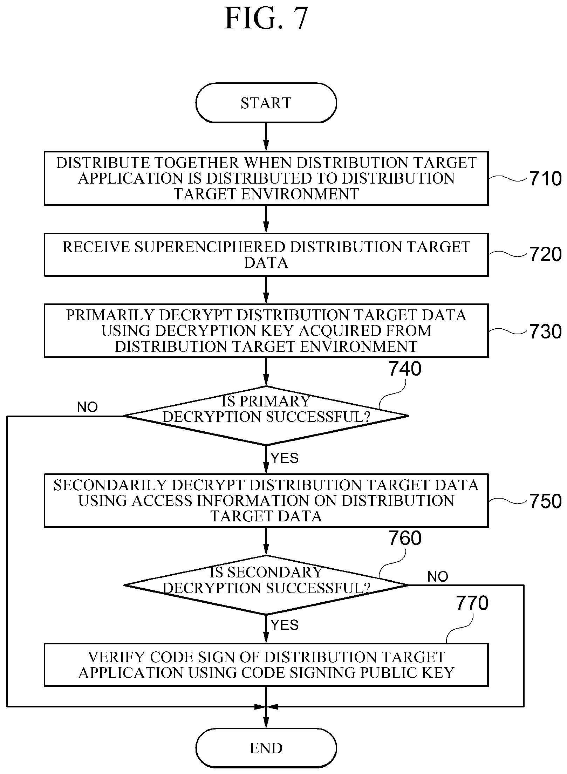

FIG. 7 is a flowchart illustrating a data decryption method according to another embodiment.

The method illustrated in FIG. 7 may be performed, for example, by the data decryption apparatus 300 described above.

Steps 720 to 770 respectively corresponding to steps 610 to 660 in an embodiment described with reference to FIG. 6 are the same or similar steps as described in an embodiment, and thus a more detailed description thereof will be omitted.

The data decryption apparatus 300 may be distributed together when the distribution target application is distributed to the distribution target environment 130 before receiving the superenciphered distribution target data from the data encryption apparatus 120 (710).

In the flowchart illustrated in FIG. 7, the method is described by dividing the method into a plurality of steps, but at least some of the steps may be performed in a different order, performed together by being combined with other steps, omitted, performed by being divided into detailed steps, or performed by being added with one or more steps (not illustrated).

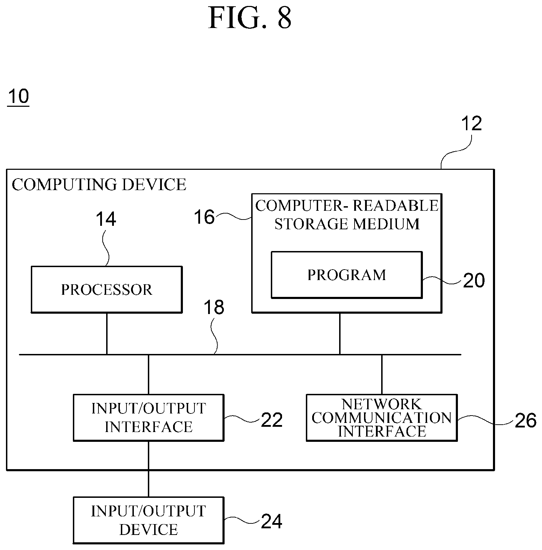

FIG. 8 is a block diagram for illustratively describing a computing environment 10 that includes a computing device suitable for use in exemplary embodiments. In the illustrated embodiment, each component may have different functions and capabilities in addition to those described below, and additional components may be included in addition to those described below.

The illustrated computing environment 10 includes a computing device 12. In an embodiment, the computing device 12 may be the data encryption apparatus 120. In addition, the computing device 12 may be the data decryption apparatus 300.

The computing device 12 includes at least one processor 14, a computer-readable storage medium 16, and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured to cause the computing device 12 to perform operations according to the exemplary embodiment.

The computer-readable storage medium 16 is configured to store the computer-executable instruction or program code, program data, and/or other suitable forms of information. A program 20 stored in the computer-readable storage medium 16 includes a set of instructions executable by the processor 14. In one embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and store desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a voice or sound input device, input devices such as various types of sensor devices and/or photographing devices, and/or output devices such as a display device, a printer, a speaker, and/or a network card. The exemplary input/output device 24 may be included inside the computing device 12 as a component constituting the computing device 12, or may be connected to the computing device 12 as a separate device distinct from the computing device 12.

Meanwhile, the embodiment of the present invention may include a program for performing the methods described in this specification on a computer, and a computer-readable recording medium containing the program. The computer-readable recording medium may contain program instructions, local data files, local data structures, etc., alone or in combination. The computer-readable recording medium may be specially designed and constructed for the present invention, or may be commonly used in the field of computer software. Examples of computer-readable recording media include magnetic media such as a hard disk, a floppy disk, and a magnetic tape, optical recording media such as a CD-ROM and a DVD, and hardware devices such as a ROM, a RAM, a flash memory, etc., that are specially configured to store and execute program instructions are included. Examples of the program may include high-level language code that can be executed by a computer using an interpreter, etc., as well as machine language code generated by a compiler.

Although the present invention has been described in detail through representative examples as above, those skilled in the art to which the present invention pertains will understand that various modifications may be made thereto within the limit that do not depart from the scope of the present invention. Therefore, the scope of rights of the present invention should not be limited to the described embodiments, but is defined by the enclosed claims.

## Claims

1. A data encryption apparatus, comprising:
a receptor (122) configured to receive distribution target data including one or more distribution target cryptographic keys and a distribution target application from a distributor environment (110);
an encryptor (124) configured to superencipher the distribution target data by primarily encrypting the distribution target data using access information on the distribution target data, and by secondarily encrypting the primarily encrypted distribution target data using a distribution target environment cryptographic key acquired from a distribution target environment (130); and
a transmitter (126) configured to transmit the superenciphered distribution target data and the distribution target application to the distribution target environment (130),
wherein the distribution target application is an application to which a code sign has been applied, and the distribution target data further includes a public key to verify the code sign.

2. The data encryption apparatus of claim 1, wherein the distribution target data further includes at least one of:
one or more call information constituting the distribution target application; and
one or more environment variables of the distribution target application.

3. The data encryption apparatus of claim 1 or 2, wherein the access information includes ID information and password information referenced when the distribution target application is driven.

4. The data encryption apparatus of one of claims 1 to 3, wherein the distribution target data further includes a ciphertext obtained by encrypting the distribution target environment cryptographic key in the distribution target environment (130).

5. A data decryption apparatus, comprising:
a receptor (310) configured to receive distribution target data including one or more cryptographic keys intended to be distributed to a distribution target environment (130) and superenciphered, wherein the received distributed target data have been superenciphered by performing primarily encrypting using access information on distribution target data, and by performing secondarily encrypting the primarily encrypted distribution target data using a distribution target environment cryptographic key acquired from the distribution target environment (130);
a decryptor (320) configured to primarily decrypt the superenciphered distribution target data using a decryption key acquired from the distribution target environment (130) and to secondarily decrypt the primarily decrypted distribution target data using the access information on the distribution target data when the primary decryption is successful; and
a verifier (330) configured to verify a code sign of a distribution target application using a code signing public key included in the distribution target data when the decryptor (320) succeeds in the secondary decryption.

6. A data encryption method, comprising:
receiving (510) distribution target data including one or more distribution target cryptographic keys and a distribution target application from a distributor environment (110);
distributing (520) access information on the distribution target data and the distribution target application to a distribution target environment (130);
superenciphering (530) the distribution target data by primarily encrypting the distribution target data using access information on the distribution target data, and by secondarily encrypting the primarily encrypted distribution target data using a distribution target environment cryptographic key acquired from a distribution target environment (130); and
transmitting (540) the superenciphered distribution target data and the distribution target application to the distribution target environment (130)
wherein the distribution target application is an application to which a code sign has been applied, and the distribution target data further includes a public key for verifying the code sign.

7. The data encryption method of claim 6, wherein the distribution target data further includes at least one of:
one or more call information constituting the distribution target application; and
one or more environment variables of the distribution target application (130).

8. The data encryption method of claim 6 or 7, wherein the access information includes ID information and password information referenced when the distribution target application is driven.

9. The data encryption method of one of claims 6 to 8, wherein the distribution target data further includes a ciphertext obtained by encrypting the distribution target environment cryptographic key in the distribution target environment (130).

10. A data decryption method, comprising;
receiving (610) distribution target data including one or more cryptographic keys intended to be distributed to a distribution target environment (130) and superenciphered, wherein the received distributed target data have been superenciphered by performing primarily encrypting using access information on distribution target data, and by performing secondarily encrypting the primarily encrypted distribution target data using a distribution target environment cryptographic key acquired from the distribution target environment (130);
primarily decrypting (620) the superenciphered distribution target data using a decryption key acquired from the distribution target environment (130);
secondarily decrypting (640) the primarily decrypted distribution target data using the access information on the distribution target data when the primary decryption is successful; and
verifying (660) a code sign of a distribution target application using a code signing public key included in the distribution target data when the secondary decryption is successful.

## Patentansprüche

1. Datenverschlüsselungsvorrichtung, die umfasst:
eine Empfangseinrichtung (122), die so ausgeführt ist, dass sie Verteilungsziel-Daten, die einen oder mehrere kryptografischen/kryptografische Schlüssel für Verteilungsziele sowie eine Verteilungsziel-Anwendung einschließen, von einer Verteiler-Umgebung (110) empfängt;
eine Verschlüsselungseinrichtung (124), die so ausgeführt ist, dass sie die Verteilungsziel-Daten Superverschlüsselung unterzieht, indem sie die Verteilungsziel-Daten Primärverschlüsselung unter Verwendung von Informationen über Zugriff auf die Verteilungsziel-Daten unterzieht und indem sie die Primärverschlüsselung unterzogenen Verteilungsziel-Daten unter Verwendung eines von einer Verteilungsziel-Umgebung (130) bezogenen kryptographischen Schlüssels für die Verteilungsziel-Umgebung Sekundärverschlüsselung unterzieht; sowie
eine Sendeeinrichtung (126), die so ausgeführt ist, dass sie die Superverschlüsselung unterzogenen Verteilungsziel-Daten sowie die Verteilungsziel-Anwendung zu der Verteilungsziel-Umgebung (130) sendet,
wobei die Verteilungsziel-Anwendung eine Anwendung ist, auf die eine Code-Signatur angewendet worden ist, und die Verteilungsziel-Daten des Weiteren einen öffentlichen Schlüssel zum Verifizieren der Code-Signatur einschließen.

2. Datenverschlüsselungsvorrichtung nach Anspruch 1, wobei die Verteilungsziel-Daten des Weiteren einschließen:
eine oder mehrere Aufruf-Information/en, die die Verteilungsziel-Anwendung bildet/bilden; oder/und
eine oder mehrere Umgebungsvariable/n der Verteilungsziel-Anwendung.

3. Datenverschlüsselungsvorrichtung nach Anspruch 1 oder 2, wobei die Informationen über Zugriff Kennungs-Informationen sowie Passwort-Informationen einschließen, auf die Bezug genommen wird, wenn die Verteilungsziel-Anwendung angesteuert wird.

4. Datenverschlüsselungsvorrichtung nach einem der Ansprüche 1 bis 3, wobei die Verteilungsziel-Daten des Weiteren einen Schlüsseltext einschließen, der erzeugt wird, indem der kryptographische Schlüssel für Verteilungsziele in der Verteilungsziel-Umgebung (130) verschlüsselt wird.

5. Datenverschlüsselungsvorrichtung, die umfasst:
eine Empfangseinrichtung (310), die so ausgeführt ist, dass sie Verteilungsziel-Daten empfängt, die einen oder mehrere kryptografischen/kryptografische Schlüssel einschließen, der/die zum Verteilen an eine Verteilungsziel-Umgebung (130) sowie für Superverschlüsselung bestimmt ist/sind, wobei die empfangenen Verteilungsziel-Daten Superverschlüsselung unterzogen worden sind, indem Primärverschlüsselung unter Verwendung von Informationen über Zugriff auf Verteilungsziel-Daten durchgeführt wurde und indem Sekundärverschlüsselung der Primärverschlüsselung unterzogenen Verteilungsziel-Daten unter Verwendung eines von der Verteilungsziel-Umgebung (130) bezogenen kryptographischen Schlüssels für die Verteilungsziel-Umgebung durchgeführt wird;
eine Entschlüsselungseinrichtung (320), die so ausgeführt ist, dass sie die Superverschlüsselung unterzogenen Verteilungsziel-Daten Primärentschlüsselung unter Verwendung eines von der Verteilungsziel-Umgebung (130) bezogenen Entschlüsselungs-Schlüssels unterzieht und die Primärentschlüsselung unterzogenen Verteilungsziel-Daten Sekundärentschlüsselung unter Verwendung der Informationen über Zugriff auf die Verteidigungsziel-Daten unterzieht, wenn die Primärentschlüsselung erfolgreich ist; sowie
eine Verifizierungseinrichtung (330), die so ausgeführt ist, dass sie eine Code-Signatur der Verteilungsziel-Anwendung unter Verwendung eines in den Verteilungsziel-Daten enthaltenen öffentlichen Schlüssels für Code-Signatur verifiziert, wenn die Entschlüsselungseinrichtung (320) bei der Sekundärentschlüsselung erfolgreich ist.

6. Datenverschlüsselungsverfahren, das umfasst:
Empfangen (510) von Verteilungsziel-Daten, die einen oder mehrere kryptografischen/kryptografische Schlüssel für Verteilungsziele sowie eine Verteilungsziel-Anwendung einschließen, von einer Verteiler-Umgebung (110);
Verteilen (520) von Informationen über Zugriff auf die Verteilungsziel-Daten sowie die Verteilungsziel-Anwendung an eine Verteilungsziel-Umgebung (130);
Durchführen von Superverschlüsselung (530) der Verteilungsziel-Daten mittels Durchführen von Primärverschlüsselung der Verteilungsziel-Daten unter Verwendung von Informationen über Zugriff auf die Verteilungsziel-Daten und Durchführen von Sekundärverschlüsselung der Primärverschlüsselung unterzogenen Verteilungsziel-Daten unter Verwendung eines von einer Verteilungsziel-Umgebung (130) bezogenen kryptographischen Schlüssels für die Verteilungsziel-Umgebung; sowie
Senden (540) der Superverschlüsselung unterzogenen Verteilungsziel-Daten sowie der Verteilungsziel-Anwendung zu der Verteilungsziel-Umgebung (130),
wobei die Verteilungsziel-Anwendung eine Anwendung ist, auf die eine Code-Signatur angewendet worden ist, und die Verteilungsziel-Daten des Weiteren einen öffentlichen Schlüssel zum Verifizieren der Code-Signatur einschließen.

7. Datenverschlüsselungsverfahren nach Anspruch 6, wobei die Verteilungsziel-Daten des Weiteren einschließen:
eine oder mehrere Aufruf-Information/en, die die Verteilungsziel-Anwendung bildet/bilden; oder/und
eine oder mehrere Umgebungsvariable/n der Verteilungsziel-Anwendung (130).

8. Datenverschlüsselungsverfahren nach Anspruch 6 oder 7, wobei die Informationen über Zugriff Kennungs-Informationen sowie Passwort-Informationen einschließen, auf die Bezug genommen wird, wenn die Verteilungsziel-Anwendung angesteuert wird.

9. Datenverschlüsselungsverfahren nach einem der Ansprüche 6 bis 8, wobei die Verteilungsziel-Daten des Weiteren einen Schlüsseltext einschließen, der erzeugt wird, indem der kryptographische Schlüssel für die Verteilungsziel-Umgebung in der Verteilungsziel-Umgebung (130) verschlüsselt wird.

10. Datenentschlüsselungsverfahren, das umfasst:
Empfangen (610) von Verteilungsziel-Daten, die einen oder mehrere kryptografischen/kryptografische Schlüssel einschließen, der/die zum Verteilen an eine Verteilungsziel-Umgebung (130) sowie für Superverschlüsselung bestimmt sind, wobei die empfangenen Verteilungsziel-Daten mittels Durchführen von Primärverschlüsselung unter Verwendung von Informationen über Zugriff auf Verteilungsziel-Daten sowie mittels Durchführen von Sekundärverschlüsselung der Primärverschlüsselung unterzogenen Verteilungsziel-Daten unter Verwendung eines von einer Verteilungsziel-Umgebung (130) bezogenen kryptographischen Schlüssels für die Verteilungsziel-Umgebung Superverschlüsselung unterzogen worden sind;
Durchführen von Primärentschlüsselung (26) der Superverschlüsselung unterzogenen Verteilungsziel-Daten unter Verwendung eines von der Verteilungsziel-Umgebung (130) bezogenen Entschlüsselungs-Schlüssels;
Durchführen von Sekundärentschlüsselung (640) der Primärentschlüsselung unterzogenen Verteilungsziel-Daten unter Verwendung der Informationen über Zugriff auf die Verteilungsziel-Daten, wenn die Primärentschlüsselung erfolgreich ist; und
Verifizieren (660) einer Code-Signatur einer Verteilungsziel-Anwendung unter Verwendung eines in den Verteilungsziel-Daten enthaltenen öffentlichen Schlüssels für Code-Signatur, wenn die Sekundärentschlüsselung erfolgreich ist.

## Revendications

1. Appareil de cryptage de données, comprenant :
un récepteur (122) configuré pour recevoir des données cibles de distribution comportant une ou plusieurs clés cryptographiques cibles de distribution et une application cible de distribution en provenance d'un environnement de distribution (110) ;
un crypteur (124) configuré pour surchiffrer les données cibles de distribution en cryptant primairement les données cibles de distribution à l'aide d'informations d'accès sur les données cibles de distribution, et en cryptant secondairement les données cibles de distribution cryptées primairement l'aide d'une clé cryptographique d'environnement cible de distribution acquise auprès d'un environnement cible de distribution (130) ; et
un émetteur (126) configuré pour transmettre les données cibles de distribution surchiffrées et l'application cible de distribution à l'environnement cible de distribution (130),
dans lequel l'application cible de distribution est une application à laquelle une signature de code a été appliquée, et les données cibles de distribution comportent en outre une clé publique pour vérifier la signature de code.

2. Appareil de cryptage de données selon la revendication 1, dans lequel les données cibles de distribution comportent en outre au moins l'une parmi :
une ou plusieurs informations d'appel constituant l'application cible de distribution ; et
une ou plusieurs variables d'environnement de l'application cible de distribution.

3. Appareil de cryptage de données selon la revendication 1 ou 2, dans lequel les informations d'accès comportent des informations d'ID et des informations de mot de passe référencées lors de la commande de l'application cible de distribution.

4. Appareil de cryptage de données selon l'une des revendications 1 à 3, dans lequel les données cibles de distribution comportent en outre un texte chiffré obtenu par cryptage de la clé cryptographique d'environnement cible de distribution dans l'environnement cible de distribution (130).

5. Appareil de décryptage de données, comprenant :
un récepteur (310) configuré pour recevoir des données cibles de distribution comportant une ou plusieurs clés cryptographiques destinées à être distribuées dans un environnement cible de distribution (130) et surchiffrées, dans lequel les données cibles distribuées reçues ont été surchiffrées en effectuant un cryptage primaire à l'aide d'informations d'accès sur des données cibles de distribution, et en effectuant un cryptage secondaire des données cibles de distribution cryptées primairement à l'aide d'une clé cryptographique d'environnement cible de distribution acquise auprès de l'environnement cible de distribution (130) ;
un décrypteur (320) configuré pour décrypter primairement les données cibles de distribution surchiffrées à l'aide d'une clé de décryptage acquise auprès de l'environnement cible de distribution (130) et pour décrypter secondairement les données cibles de distribution décryptées primairement à l'aide des informations d'accès sur les données cibles de distribution lorsque le décryptage primaire est réussi ; et
un vérificateur (330) configuré pour vérifier une signature de code d'une application cible de distribution à l'aide d'une clé publique de signature de code comprise dans les données cibles de distribution lorsque le décrypteur (320) réussit le décryptage secondaire.

6. Procédé de cryptage de données, comprenant :
la réception (510) de données cibles de distribution comportant une ou plusieurs clés cryptographiques cibles de distribution et une application cible de distribution provenant d'un environnement de distribution (110) ;
la distribution (520) d'informations d'accès sur les données cibles de distribution et l'application cible de distribution à un environnement cible de distribution (130) ;
le surchiffrage (530) des données cibles de distribution en cryptant primairement les données cibles de distribution à l'aide d'informations d'accès sur les données cibles de distribution, et en cryptant secondairement les données cibles de distribution cryptées primairement à l'aide d'une clé cryptographique d'environnement cible de distribution acquise auprès d'un environnement cible de distribution (130) ; et
la transmission (540) des données cibles de distribution surchiffrées et l'application cible de distribution à l'environnement cible de distribution (130)
dans lequel l'application cible de distribution est une application à laquelle une signature de code a été appliquée, et les données cibles de distribution comportent en outre une clé publique pour vérifier la signature de code.

7. Procédé de cryptage de données selon la revendication 6, dans lequel les données cibles de distribution comportent en outre au moins l'une parmi :
une ou plusieurs informations d'appel constituant l'application cible de distribution ; et
une ou plusieurs variables d'environnement de l'application cible de distribution (130).

8. Procédé de cryptage de données selon la revendication 6 ou 7, dans lequel les informations d'accès comportent des informations d'ID et des informations de mot de passe référencées lors de la commande de l'application cible de distribution.

9. Procédé de cryptage de données selon l'une des revendications 6 à 8, dans lequel les données cibles de distribution comportent en outre un texte chiffré obtenu par cryptage de la clé cryptographique d'environnement cible de distribution dans l'environnement cible de distribution (130).

10. Procédé de décryptage de données, comprenant :
la réception (610) de données cibles de distribution comportant une ou plusieurs clés cryptographiques destinées à être distribuées à un environnement cible de distribution (130) et surchiffrées, dans lequel les données cibles distribuées reçues ont été surchiffrées en effectuant un cryptage primaire à l'aide d'informations d'accès sur des données cibles de distribution, et en effectuant un cryptage secondaire des données cibles de distribution primairement cryptées à l'aide d'une clé cryptographique d'environnement cible de distribution acquise auprès de l'environnement cible de distribution (130) ;
le décryptage primaire (620) des données cibles de distribution surchiffrées à l'aide d'une clé de décryptage acquise auprès de l'environnement cible de distribution (130) ;
le décryptage secondaire (640) des données cibles de distribution primairement décryptées à l'aide des informations d'accès sur les données cibles de distribution lorsque le décryptage principal est réussi ; et
la vérification (660) d'une signature de code d'une application cible de distribution à l'aide d'une clé publique de signature de code comprise dans les données cibles de distribution lorsque le décryptage secondaire est réussi.
